# EUROPEAN PATENT APPLICATION

(11) **EP 1 429 232 A2**
(43) Date of publication of application: **16.06.2004**
(21) Application number: 03257788.4
(22) Date of filing: 11.12.2003
(51) Int. Cl.: G06F 1/14, G06F 9/44

(54) **Time setting system, time setting terminal, time setting program, and time setting method**

(30) Priority: 12.12.2002 JP 2002360985
(71) Applicant: SEIKO EPSON CORPORATION, Shinjuku-ku, Tokyo 163-0811 (JP)
(72) Inventor: Fukao, Akihito, Suwa-shi, Nagano-ken 392-8502 (JP)
(74) Representative: Kenyon, Sarah Elizabeth

(57) **Abstract**

To provide a time setting system that allows a client to easily set time without the need for modifying a server.
A file management server 100 is communicatingly connected to a printer 200. Upon receiving a file creation request, the file management server 100 creates a file responsive to the file creation request, and stores the created file together with the time of file creation in a storage unit 42. Upon receiving a property information acquisition request, the file management server 100 create property information of a file, responsive to the property information acquisition request, from among files stored in the storage unit 42, and sends the created property information to the printer 200. The printer 200 sends the file creation request to the file management server 100, and sends the property information acquisition request to the file management server 100. Upon receiving the property information, the printer 200 sets time based on the time of creation contained in the property information.

## Description

The present invention relates to a time setting system, a time setting terminal, a time setting program, and a time setting method and, in particular, to a time setting system, a time setting terminal, a time setting program, and a time setting method for allowing a client to easily set time without the need for modifying or changing a server.

A device having a built-in timepiece disclosed in a patent document 1 has been conventionally available as a device using technique for setting time.

In accordance with the technique disclosed in the patent document 1, a communication apparatus having a built-in timepiece is communicatingly connected to a WWW (World Wide Web) server through the Internet. Japanese Standard Time is set as a standard time in the WWW server. The communication apparatus has a TCP/IP (Transmission Control Protocol/Internet Protocol) function, accesses a WWW server using the TCP/IP function, acquires Japanese Standard Time from home page information of the WWW server, and then sets time in the built-in timepiece based on acquired Japanese Standard Time. In this way, the standard time is easily acquired without significant cost, and is set in the build-in timepiece.

### Patent document 1

### Japanese Unexamined Patent Application Publication No. 2002-55890

In order that the above-mentioned known built-in timepiece provides Japanese Standard Time as home page information, a special program such as CGI must be produced and then the produced CGI program must be executed on the WWW server. The WWW server must undergo modification accordingly.

The present invention has been developed in view of the conventional art having the unsolved problem, and it is an object of the present invention to provide a time setting system, a time setting terminal, a time setting program, and a time setting method for allowing a client to easily set time without the need for modifying or changing a server.

Through substantial studies, the inventors of this invention have found that file management functions of ordinary servers such as a WWW server contain a function of recording a file together with time of file creation, and a function of providing a client with the time of creation of the file, and that time setting to the client is performed using these functions.

To achieve the above object, a time setting system of a first invention communicatingly connects a time setting terminal to a file management terminal that records a file together with time of the creation of the file, and sets time in the time setting terminal using the file management terminal, wherein upon receiving a file creation request for requesting the creation of the file, the file management terminal creates the file responsive to the received file creation request, and records the created file together with time of the creation of the file, and upon receiving a detailed information acquisition request for requesting the acquisition of file detailed information containing the time of the file creation, the file management terminal creates the file detailed information concerning the file responsive to the received detailed information acquisition request, and sends the created file detailed information to the time setting terminal, and wherein the time setting terminal sends the file creation request to the file management terminal, and sends the detailed information acquisition request to the file management terminal, and upon receiving the file detailed information, the time setting terminal sets time based on the time of the file creation extracted from the received file detailed information.

In this arrangement, the time setting terminal sends the file creation request to the file management terminal.

Upon receiving the file creation request, the file management terminal creates the file responsive to the received file creation request, and records the created file together with the time of the file creation.

The time setting terminal sends the detailed information acquisition request to the file management terminal.

Upon receiving the detailed information acquisition request, the file management terminal creates the file detailed information concerning the file responsive to the received detailed information acquisition request, and sends the created file detailed information to the time setting terminal.

Upon receiving the file detailed information, the time setting terminal sets time based on the time of the file creation extracted from the received file detailed information.

In this way, the file management terminal uses, as the file management functions thereof, a function of recording a file together with time of creation of the file and a function of providing the time setting terminal with the time of the file creation, to set time in the time setting terminal. In other words, the time setting terminal sets time taking advantage of the typical functions of a server, such as a WWW server. In comparison with the conventional art, the time setting system of the present invention relatively easily sets time in the time setting terminal without modifying or changing a server.

Any facility connected to one end of a communication line connected to the time setting terminal and having a server function is acceptable as the file management terminal. The file management terminal may have both a client function and a server function. The same is true of a time setting system in a second invention, a time setting terminal in a seventh invention, a time setting program in an eighth invention, and a time setting method in a tenth invention.

Furthermore, a time setting system of the second invention communicatingly connects a time setting terminal having no built-in timepiece to a file management terminal that records a file together with time of the creation of the file, and sets time in the time setting terminal using the file management terminal, wherein the time management terminal comprises storage means for storing the file, wherein upon receiving a file creation request for requesting the creation of the file, the file management terminal creates the file responsive to the received file creation request, and records the created file together with time of the creation of the file in the storage means, and upon receiving a detailed information acquisition request for requesting the acquisition of file detailed information containing the time of the file creation, the file management terminal creates the file detailed information concerning the file responsive to the received detailed information acquisition request from among files stored in the storage means, and sends the created file detailed information to the time setting terminal, and wherein the time setting terminal sends the file creation request to the file management terminal, and sends the detailed information acquisition request to the file management terminal, and upon receiving the file detailed information, the time setting terminal sets time based on the time of the file creation extracted from the received file detailed information.

In this arrangement, the time setting terminal sends the file creation request to the file management terminal.

Upon receiving the file creation request, the file management terminal creates the file responsive to the received file creation request, and records the created file together with the time of the file creation in the storage means.

The time setting terminal sends the detailed information acquisition request to the file management terminal.

Upon receiving the detained information acquisition request, the file management terminal creates the file detailed information concerning the file responsive to the received detailed information acquisition request, and sends the created file detailed information to the time setting terminal.

Upon receiving the file detailed information, the time setting terminal sets time based on the time of the file creation extracted from the received file detailed information.

In this way, the file management terminal uses, as the file management functions thereof, a function of recording a file together with time of the creation of the file and a function of providing the time setting terminal with the time of the file creation, to set time in the time setting terminal. In other words, the time setting terminal sets time taking advantage of the typical function of a server, such as a WWW server. In comparison with the conventional art, it is advantageous that the time setting system of the present invention relatively easily sets time in the time setting terminal without modifying or changing a server.

The storage means stores the file using any means and at any time. The storage means may store the file beforehand, or may store the file in response to an input from the outside when the file management terminal operates, rather than storing the file beforehand.

In the time setting system of a third invention, in accordance with the second invention, the time setting terminal further includes elapsed time measurement means for measuring time elapsed from a predetermined reference time, and upon receiving the file detailed information, the time setting terminal sets standard reference time based on the time of the file creation extracted from the received file detailed information and the elapsed time measured by the elapsed time measurement means, and after the setting of the standard reference time, the time setting terminal sets time based on the set standard reference time and the elapsed time measured by the elapsed time measurement means.

In this arrangement, the elapsed time measurement means in the time setting terminal measures time elapsed from the predetermined reference time. Upon receiving the file detailed information, the time setting terminal sets standard reference time based on the time of the file creation extracted from the file detailed information and the elapsed time measured by the elapsed time measurement means. After the standard reference time is set, the time setting terminal sets time based on the set standard reference time and the elapsed time measured by the elapsed time measurement means.

As a result, the time setting means sets time based on the standard reference time and the elapsed time once the standard reference time is set, and the time setting terminal is free from accessing the file management terminal each time time setting is performed. This arrangement reduces the number of accesses to the file management terminal.

The standard reference time may be any type as long as the standard reference time is set based on the elapsed time measured by the elapsed time measurement means. For example, the standard reference time includes start-up time of the time setting terminal.

In the time setting system of a fourth invention in accordance with the third invention, when the standard reference time is not set, the time setting terminal sets tentative time in a time setting item that requires time setting, and when the standard reference time is set, the time setting terminal updates the tentative time with actual time based on the set standard reference time and the elapsed time measured by the elapsed time measurement means.

In this arrangement, the time setting terminal sets the tentative time in the time setting item that requires time setting when the standard reference time is not set. When the standard reference time is set, the time setting terminal updates the tentative time with actual time based on the set standard reference time and the elapsed time measured by the elapsed time measurement means.

As a result, when the standard reference time is set, the time set in the time setting item is retrospectively updated with relatively precise time. It is advantageous that time control is performed at a relatively precise manner even in a time setting terminal having no built-in timepiece.

In a time setting system of a fifth invention, in accordance with the fourth invention, the time setting terminal further includes start-up count counting means for counting the start-up count, and when the standard reference time is not set, the time setting terminal sets the start-up count counted by the start-up count counting means and the tentative time in the time setting item that requires time setting, and when the standard reference time is set, the time setting terminal updates the tentative time with actual time in a time setting item which has the same start-up count as the start-up count counted by the start-up counting means, based on the set standard reference time and the elapsed time measured by the elapsed time measurement means.

In this arrangement, the start-up count counting means in the time setting terminal counts the start-up count at each start-up. When the standard reference time is not set, the start-up count counted by the start-up count counting means and the tentative time are set in the time setting item that requires time setting. When the standard reference time is set, the time setting terminal updates the tentative time with actual time in the time setting item which has the same start-up count as the start-up count counted by the start-up counting means, based on the set standard reference time and the elapsed time measured by the elapsed time measurement.

As a result, when the standard reference time is set, the time set in the time setting item is retrospectively updated with relatively precise time. Since the tentative time is updated with actual time in the time setting item which has the same start-up count as the start-up count counted by the start-up counting means, time becomes even more precise. Time control is performed at a relatively precise manner even in a time setting terminal having no built-in timepiece.

A time setting system of a sixth invention is a system for setting time and includes elapsed time measurement means for measuring time elapsed from a predetermined reference time, wherein when standard reference time is not set, the time setting system sets tentative time in a time setting item that requires time setting, and when the standard reference time is set, the time setting system updates the tentative time with actual time based on the set standard reference time and the elapsed time measured by the elapsed time measurement means.

In this arrangement, the tentative time is set in the time setting item that requires time setting when the standard reference time is not set. The elapsed time measurement means measures time elapsed from a predetermined reference time. When the standard reference time is set, the tentative time is updated with actual time based on the set standard reference time and the elapsed time measured by the elapsed time measurement means.

When the standard reference time is set, the time set in the time setting item is retrospectively updated with relatively precise time. Therefore it is advantageous that time control is performed at a relatively precise manner even in a time setting terminal having no built-in timepiece.

The present system may be implemented as a single apparatus, or may be implemented as a network system in which a plurality of terminals are communicatingly connected to each other. In the latter case, each element may be arranged in any of the plurality of terminals as long as the terminals are communicatingly connected to each other.

To achieve the object of the present invention, a time setting terminal of the seventh invention is communicatingly connected to the file management terminal in a time setting system of the first invention, wherein the time setting terminal sends the file creation request for requesting the creation of the file to the file management terminal, sends, to the file management terminal, the detailed information acquisition request for requesting the acquisition of file detailed information containing time of the creation of the file, and upon receiving the file detailed information, the time setting terminal sets time based on the time of the file creation extracted from the received file detailed information.

This arrangement provides the same advantages as the time setting terminal in the time setting system of the first invention. The time setting terminal of the seventh invention thus provides the same advantage as the time setting system of the first invention.

To achieve the above-referenced object, a time setting program of the eighth invention to be executed by a time setting terminal of the seventh invention containing a computer, includes sending, to the file management terminal, the file creation request for requesting the creation of the file, sending, to the file management terminal, the detailed information acquisition request for requesting the acquisition of the file detailed information containing the time of file creation, and setting time based on the time of the file creation extracted from the received file detailed information when the file detailed information is received.

If the program is read and performed by the time setting terminal in this arrangement, the same operation as that of the time setting terminal of the seventh invention is performed and the same advantage as that of the time setting terminal of the seventh invention is provided.

A time setting program of a ninth invention to be executed by a time setting system of the sixth invention containing a computer system, includes setting tentative time in the time setting item that requires time setting when the standard reference time is not set, and updating the tentative time with actual time based on the set standard reference time and the elapsed time measured by the elapsed time measurement means when the standard reference time is set.

If the program is read and performed by the time setting system in this arrangement, the same operation as that of the time setting system of the sixth invention is performed and the same advantage as that of the time setting system of the sixth invention is provided.

To achieve the object of the present invention, a time setting method of the tenth invention communicatingly connects a time setting terminal to a file management terminal that records a file together with time of the creation of the file, and sets time in the time setting terminal using the file management terminal. The time setting method includes a file creation request sending step, performed by the time setting terminal, for sending, to the file management terminal, a file creation request for requesting the creation of the file, a file creating step, performed by the file management terminal, for creating the file responsive to the received file creation request when the file creation request is received, a file recording step, performed by the file management terminal, for recording the file created in the file creating step together with the time of the creation of the file, a detailed information acquisition request sending step, performed by the time setting terminal, for sending, to the file management terminal, a detailed information acquisition request for requesting the acquisition of file detailed information containing the time of the file creation, a file detailed information creating step, performed by the file management terminal, for creating the file detailed information relating to the file responsive to the received detailed information acquisition request when the detailed information acquisition request is received, a file detailed information sending step, performed by the file management terminal, for sending, to the time setting terminal, the file detailed information created in the file detained information creating step, and a time setting step, performed by the time setting terminal, for setting time based on the time of file creation extracted from the received file detailed information when the file detailed information is received.

The tenth invention provides the same advantage as that of the time setting system of the first invention.

A time setting method of an eleventh invention for setting time includes an elapsed time measuring step for measuring time elapsed from a predetermined reference time, a tentative time setting step for setting tentative time in a time setting item that requires time setting when standard reference time is not set, and a time resetting step for updating the tentative time with actual time based on the set standard reference time and the elapsed time measured in the elapsed time measuring step.

The eleventh invention provides the same advantage as that of the time setting system of the sixth invention.

Embodiments of the present invention will now be described by way of further example only and with reference to the accompanying drawings, in which:
Fig. 1 is a block diagram of the network system implementing the present invention.
Fig. 2 is a block diagram illustrating the structure of the file management server 100.
Fig. 3 is a flowchart illustrating a file creation process.
Fig. 4 is a flowchart illustrating a property information providing process.
Fig. 5 is a block diagram illustrating the structure of a printer 200.
Fig. 6 is a flowchart illustrating a device basic information registration process.
Fig. 7 is a flowchart illustrating an elapsed time measurement process.
Fig. 8 is a flowchart illustrating an event log creation process.
Fig. 9 is a flowchart illustrating a start-up time setting process.
Fig. 10 is a flowchart illustrating a time correction process.
Fig. 11 is a flowchart illustrating a start-up count counting process.
Fig. 12 is a flowchart illustrating an event creation process.
Fig. 13 is a flowchart illustrating a time correction process.

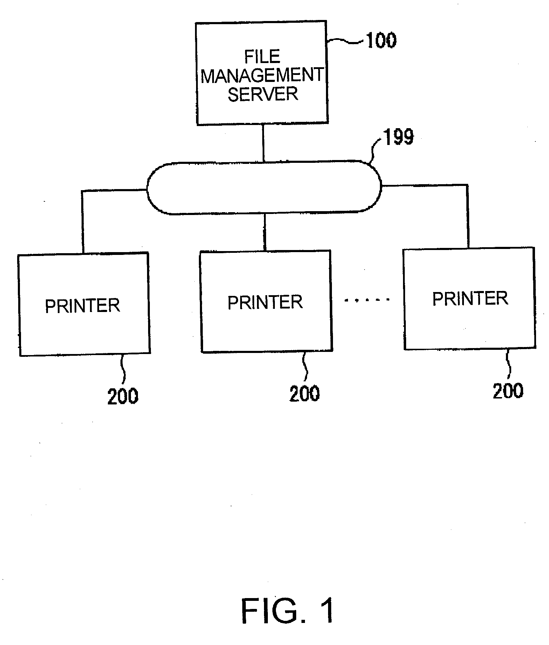

A first embodiment of the present invention is now discussed with reference to Fig. 1. Fig. 1 through Fig. 10 show a time setting system, a time setting terminal, a time setting program, and a time setting method in accordance with the first embodiment of the present invention.

In this embodiment of the present invention, the time setting system, the time setting terminal, the time setting program, and the time setting method are applied to a case, in which time is set in a printer 200 having no built-in timepiece using a file management server 100 as shown in Fig. 1.

The structure of a network system implementing the present invention is discussed below with reference to Fig. 1.

Fig. 1 is a block diagram illustrating the structure of the network system implementing the present invention.

Connected to an Internet 199 as shown in Fig. 1 are the file management server 100 that records a file together with time of creation of the file, and a plurality of printers 200. For easy understanding of the invention, other PCs are not shown. In practice, a number of PCs are connected to the Internet 199, and each PC may print data on the printer 200 through the Internet 199.

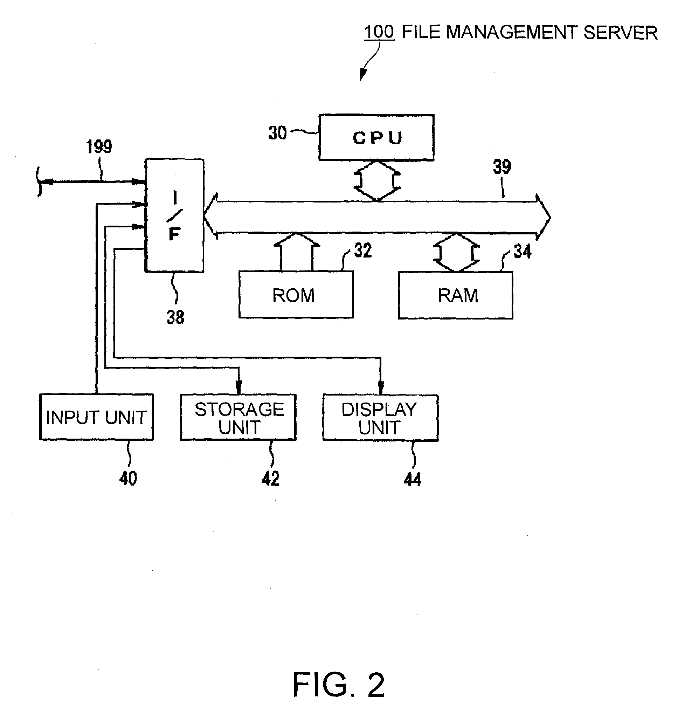

The structure of the file management server 100 is now discussed in detail with reference to Fig. 2.

Fig. 2 is a block diagram illustrating the structure of the file management server 100.

As shown, the file management server 100 includes a CPU 30 that performs arithmetic operations and controls the entire system in accordance with a control program, a ROM 32 that stores beforehand the control program of the CPU 30 in a predetermined area thereof, RAM 34 that stores data read from the ROM 32, etc., and arithmetic operation results required in the course of the arithmetic operations of the CPU 30, and an I/F 38 that interfaces input and output data to external devices. These elements are interconnected to each other through a bus 39 serving as a signal line for transferring data in a manner such that data is communicated.

Connected to the I/F 38 are external devices including an input unit 40, such as a keyboard and a mouse, serving as a human interface for receiving input data, a storage unit 42 for storing data and tables in a file, a display unit 44 for presenting a display based on a video signal, and a signal line connected to the Internet 199.

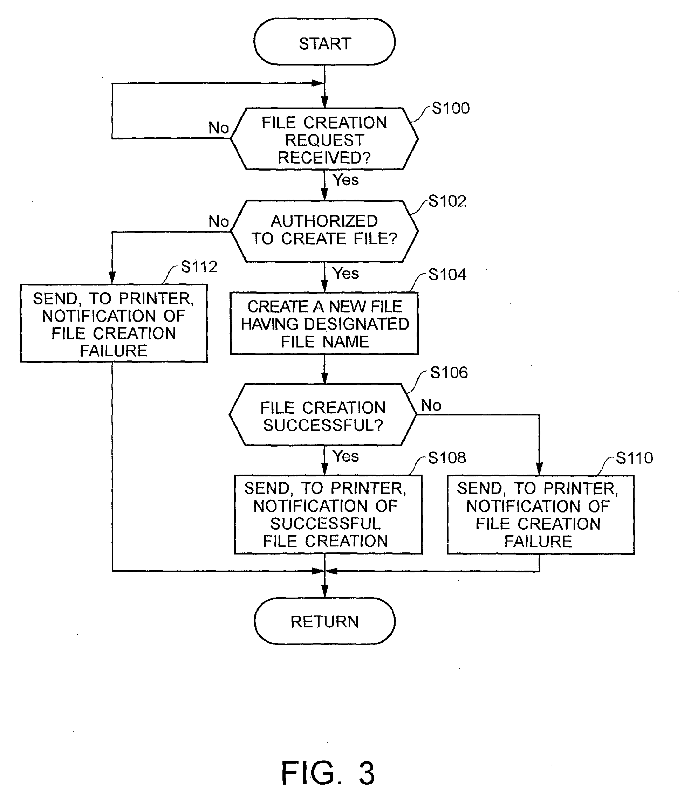

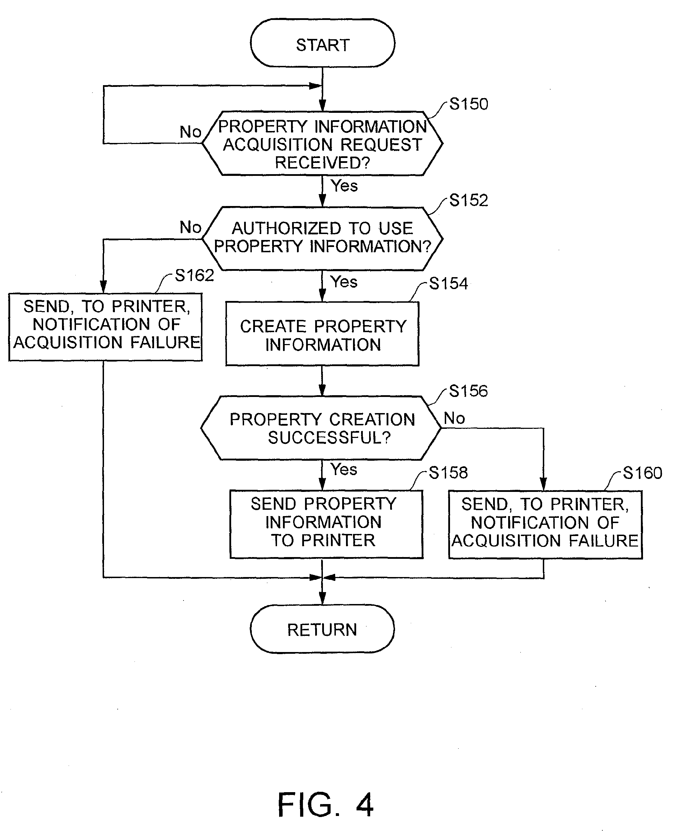

The CPU 30, including a microprocessing unit MPU, etc., starts a predetermined program stored in a predetermined area in the ROM 32, and performs, under the control of the program, a file creation process and a property information providing process in a time sharing manner in accordance with flowcharts shown in Fig. 3 and Fig. 4.

The file creation process is now discussed in detail with reference to Fig. 3.

Fig. 3 is a flowchart illustrating the file creation process.

In the file creation process, a file is created in the storage unit 42 in response to a file creation request issued by the printer 200. When the CPU 30 starts the file creation process, the algorithm first proceeds to step S100 as shown in Fig. 3.

In step S100, the CPU 30 determines whether the file creation request for requesting a file creation has been received. If it is determined that the file creation request has been received (Yes), the algorithm proceeds to step S102. If it is determined that the file creation request has not been received (No), the CPU 30 waits on standby in step S100 until a file creation request is received.

In step S102, the CPU 30 determines whether the printer 200 (hereinafter referred to as a requesting printer 200 in the file creation process) or a user thereof having received the file creation request is authorized to create a file. If the CPU 30 determines that the requesting printer 200 or the user is authorized (Yes), the algorithm proceeds to step S104, where a file having a file name designated by the file creation request is newly created in the storage unit 42. The algorithm then proceeds to step S106.

In step S106, the CPU 30 determines whether the file creation is successfully completed. If it is determined that the file creation is successfully completed (Yes), the algorithm proceeds to step S108 where a file creation success notification representing a success of file creation is sent to the requesting printer 200. A series of steps then ends and the CPU 30 returns to the main routine thereof.

If it determined in step S106 that the file creation fails (No), the algorithm proceeds to step S110 where, a file creation failure notification representing a fail of file creation is sent to the requesting printer 200. A series of steps then ends and the CPU 30 returns to the main routine thereof.

If it is determined in step S102 that the requesting printer 200 or the user thereof is not authorized to create the file (No), the algorithm proceeds to step S112. A file creation failure notification is issued to the requesting printer 200. A series of steps ends, and the CPU 30 returns to the main routine.

The property information providing process is now discussed in detail with reference to Fig. 4.

Fig. 4 is a flowchart illustrating the property information providing process.

In the property information providing process, property information containing the time of creation of a file is created in response to a property information acquisition request issued from the printer 200 and is then provided to the printer 200. The CPU 30 starts executing the process with step S150 as shown in Fig.4.

In step S150, the CPU 30 determines whether the property information acquisition request for requesting the acquisition of property information has been received. It is determined that the property information acquisition request has been received (Yes), the algorithm proceeds to step S152. If it is determined that the property information acquisition request has not been received (No), the CPU 30 waits on standby in step S150 until the property information acquisition request is received.

In step S152, the CPU 30 determines whether the printer 200 (hereinafter referred to a requesting printer 200 in the property information providing process) having received the property information acquisition request or the user thereof is authorized to acquire the property information. If it is determined that the requesting printer 200 or the user thereof is authorized to acquire the property information (Yes), the algorithm proceeds to step S154, where the CPU 30 creates the property information of a file name designated in the property information acquisition request from among files stored in the storage unit 42. The algorithm then proceeds to step S156.

In step S156, the CPU 30 determines whether the property information is successfully created. If the CPU 30 determines in step S156 that the property information is successfully created (Yes), the algorithm proceed to step S158, where the created property information is sent to the requesting printer 200. This series of steps ends and the CPU 30 returns to the main routine thereof.

If it is determined in step S156 that the property information creation fails (No), the algorithm proceeds to step S160, where an acquisition failure notification representing a fail of property information creation is sent to the requesting printer 200. This series of steps ends, and the CPU 30 returns to the main routine.

If the CPU 30 determines in step S152 that the requesting printer 200 or the user thereof is not authorized to acquire the property information (No), the algorithm proceeds to step S162, where an acquisition failure notification is sent to the requesting printer 200. This series of steps ends, and the CPU 30 returns to the main routine.

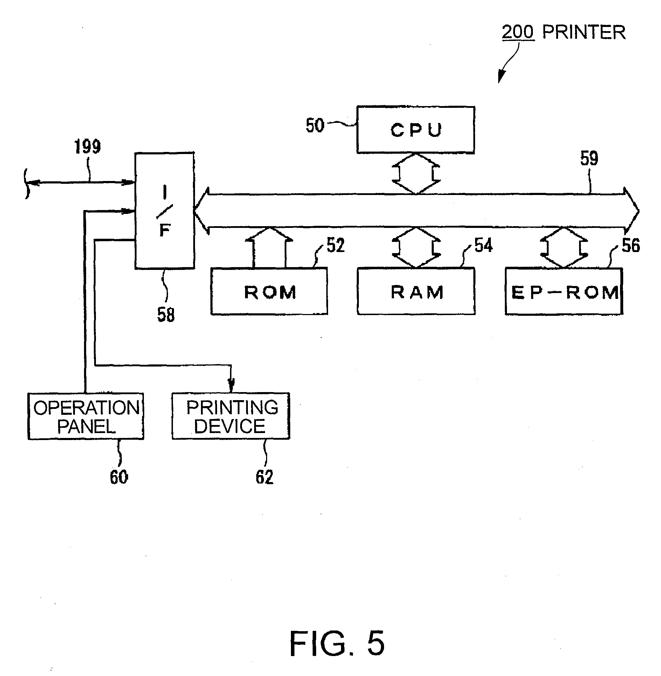

The structure of the printer 200 is discussed in detail with reference to Fig. 5. The printers 200 are identical to each other in structure.

Fig. 5 is a block diagram illustrating the structure of the printer 200.

As shown, the printer 200 includes a CPU 50 that performs arithmetic operations in accordance with a control program and controls the entire system, a ROM 52 that stores beforehand the control program of the CPU 50 in a predetermined area thereof, a RAM 54 that stores data read from the ROM 52, etc., and arithmetic operation results required in the course of the arithmetic operation of the CPU 50, an EPROM 56 that stores device basic information and any other information that must be stored in a non-volatile fashion, and an I/F 58 that interfaces input and output data to external devices. These elements are interconnected to each other through a bus 59 serving as a signal line for transferring data in a manner such that data is communicated. Unlike an ordinary PC, the printer 200 has no built-in timepiece.

Connected to the I/F 58 are external devices including an operation panel 60, serving as a human interface for receiving input data, a printing device 62 for printing print data, and a signal line that connects the printer 200 to the Internet 199.

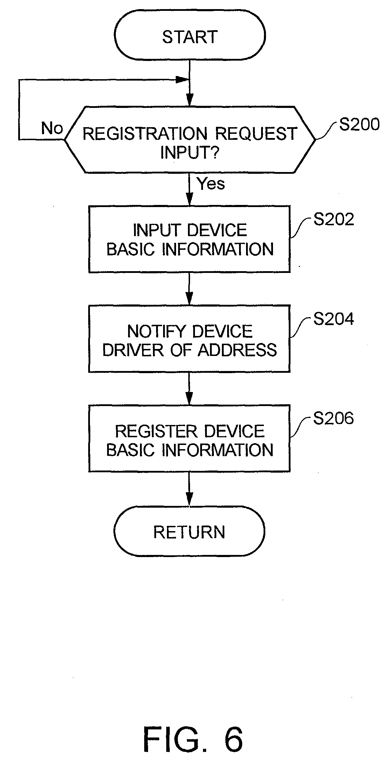

The CPU 50, including a microprocessing unit MPU, etc., starts a predetermined program stored in a predetermined area in the ROM 52, and performs, under the control of the program, a device basic information registration process, an elapsed time measurement process, an event log creation process, and a start-up time setting process in a time sharing manner in accordance with flowcharts shown in Fig. 6 through Fig. 9.

The device basic information registration process is discussed first with reference to Fig. 6.

Fig. 6 is a flowchart illustrating the device basic information registration process.

In the device basic information registration process, basic information which the printer 200 as a device requires to communicate with the file management server 100 is registered. The CPU 50 starts the process with step S200 as shown in Fig. 6.

In step S200, the CPU 50 determines whether a registration request for requesting the registration of device basic information has been input using the operation panel 60. If the CPU 50 determines that the registration request has been input (Yes), the algorithm proceeds to step S202. It the CPU 50 determines that the registration request has not been input (No), the CPU 50 waits on standby in step S200 until a registration request is input.

In step S202, the device basic information is input through the operation panel 60. The device basic information includes an IP address, a subnet mask, and a default gateway address assigned to the printer 200, an IP address assigned to the file management server 100 (hereinafter referred to as a server IP address), a protocol number representing a protocol required for communication with the file management server 100, a port number of the IP used in communication with the file management server 100, and authentication information required for authentication such as a user ID and a password.

The algorithm proceeds to step S204, where the CPU 50 notifies the printer 200 of the IP address, the subnet mask, and the default gateway address out of the input device information, thereby setting the addresses thereof in the printer 200. The algorithm proceeds to step S206, where the input device basic information is registered in the EPROM 56. This series of steps end, and the CPU 50 returns to the main routine thereof.

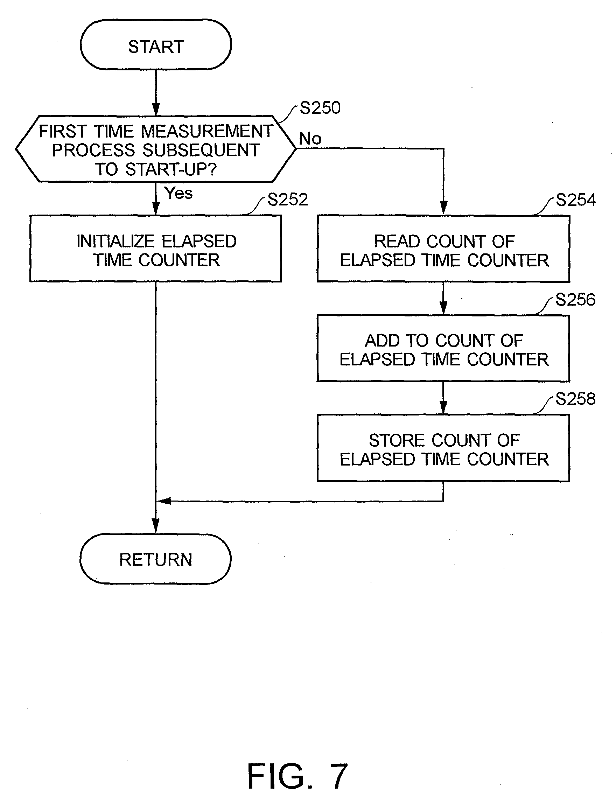

The elapsed time measurement process is discussed in detail with reference to Fig. 7.

Fig. 7 is a flowchart illustrating the elapsed time measurement process.

In the elapsed time measurement process, time elapsed from the start-up is measured. The CPU 50 starts the process with step S250 as shown in Fig. 7.

The CPU 50 determines in step S250 whether the elapsed time measurement process is performed for the fist time after the start-up. If the CPU 50 determines that the elapsed time measurement process is performed for the first time from after start-up (Yes), the algorithm proceeds to step S252, where an elapsed time counter of the RAM 54 is initialized. This series of steps ends, and the CPU 50 returns to the main routine thereof.

If the CPU 50 determines in step S250 that the elapsed time measurement process is performed for the second time or more from the start-up (No), the algorithm proceeds to step S254, where the count of the elapsed time counter of the RAM 54 is read. The algorithm proceeds to step S256, where "1" is added to the read elapsed time counter. The algorithm proceeds to step S258. The count of the elapsed time counter is stored in the RAM 54. This series of steps ends, and the CPU 50 returns to the main routine thereof.

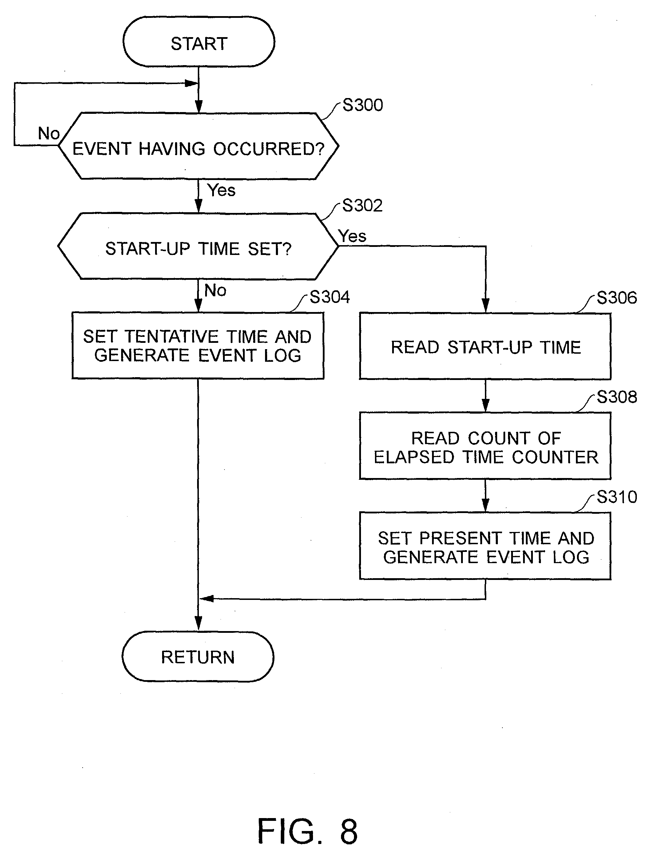

The event log creation process is discussed below with reference to Fig. 8.

Fig. 8 is a flowchart illustrating the event log creation process.

In the event log creation process, an event log indicating the content of an event is generated when the printer 200 malfunctions or is faulty, or when an event, which needs to be reported to a user or an operator, occurs. The CPU 50 starts the process with step S300 as shown in Fig. 8.

The CPU 50 determines in step S300 whether an event has occurred. If the CPU 50 determines that an event has occurred (Yes), the algorithm proceeds to step S302; otherwise (No), the CPU 50 waits on standby in step S300 until an event occurs.

In step S302, the CPU 50 determines whether start-up time is set. If the CPU 50 determines the start-up time is not set (No), the algorithm proceeds to step S304. The CPU 50 creates, in the EPROM 56, an event log with the content of the occur event associated with tentative time. This series of steps ends, and the CPU 50 returns to the main routine thereof. The tentative time may be a count of the elapsed time counter. The discrimination between the tentative time and actual time may be performed using a flag, etc.

The CPU 50 determines in step S302 that the start-up time is set (Yes), the algorithm proceeds to step S306, where the start-up time is read from the RAM 54. The algorithm then proceeds to step S308, where the count of the elapsed time counter is read from the RAM 54. The algorithm then proceeds to step S310.

In step S310, the CPU 50 calculates the elapsed time from the start-up based on the read count of the elapsed time counter, calculates present time by adding the elapsed time to the read start-up time, creates the event log in the EPROM 56 with the content of the event associated with the present time. This series of steps ends and the CPU 50 returns to the main routine thereof.

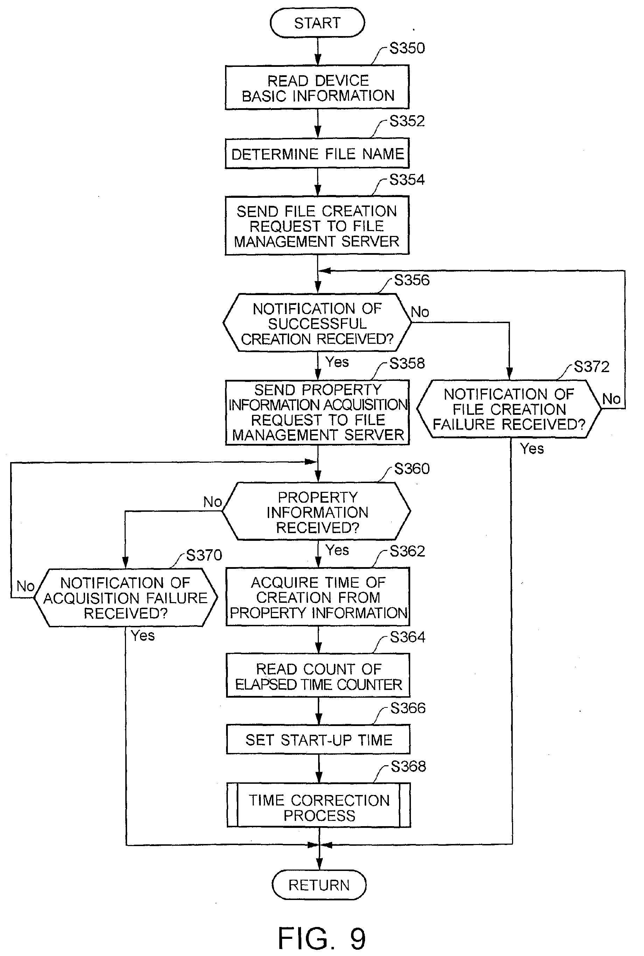

The start-up time setting process is discussed below with reference to Fig. 9.

Fig. 9 is a flowchart illustrating the start-up time setting process.

In the start-up time setting process, the start-up time is set using the file management server 100 when the start-up time is not set. The CPU 50 starts the process with step S350 as shown in Fig. 9.

The CPU 50 reads in step S350 the device basic information from the EPROM 56. In step S352, any desired file name is determined. In step S354, the CPU 50 sends a file creation request together with the determined file name based on the read device basic information, and proceeds to step S356. More specifically, to access the file management server 100, the CPU 50 uses the server IP address, the protocol number and the port number, and perform an authentication process using the authentication information if an authentication is requested.

The CPU 50 determines in step S356 whether a creation success notification has been received. If the CPU 50 determines that a creation success notification has been received (Yes), the algorithm proceeds to step S358. Based on the device basic information read in step S350, the CPU 50 sends a property information acquisition request together with the file name determined in step S352 to the file management server 100. The algorithm then proceeds to step S360.

The CPU 50 determines in step S360 whether the property information has been received. If the CPU 50 determines that the property information has been received (Yes), the algorithm proceeds to step S362, where the time of file creation is acquired from the received property information. In step S364, the count of the elapsed time counter is read from the RAM 54, and then the algorithm proceeds to step S366.

In step S366, the CPU 50 calculates time elapsed from the start-up based on the read count of the elapsed time counter, calculates the start-up time by subtracting the elapsed time from the acquired time of creation, and sets the calculated start-up time by storing the calculated start-up time in the RAM 54. In step S368, the CPU 50 performs a time correction process for correcting the tentative time set in the event log. This series of steps ends, and the CPU 50 returns to the main routine thereof.

If the CPU 50 determines in step S360 that the property information has not been received (No), the algorithm proceeds to step S370. The CPU 50 determines in step S370 whether an acquisition failure notification has been received. If the CPU 50 determines that an acquisition failure notification has been received (Yes), this series of steps ends, and the CPU 50 returns to the main routine thereof.

If the CPU 50 determines in step S370 that an acquisition failure notification has not been received (No), the algorithm loops to step S360.

If the CPU 50 determines in step S356 that a file creation success notification has not been received (No), the algorithm proceeds to step S372. The CPU 50 determines in step S372 whether a file creation failure notification has been received. If the CPU 50 determines that a file creation failure notification has been received (Yes), this series of steps ends, and the CPU 50 returns to the main routine thereof.

If the CPU 50 determines in step S372 that a file creation failure notification has not been received (No), the algorithm loops to step S356.

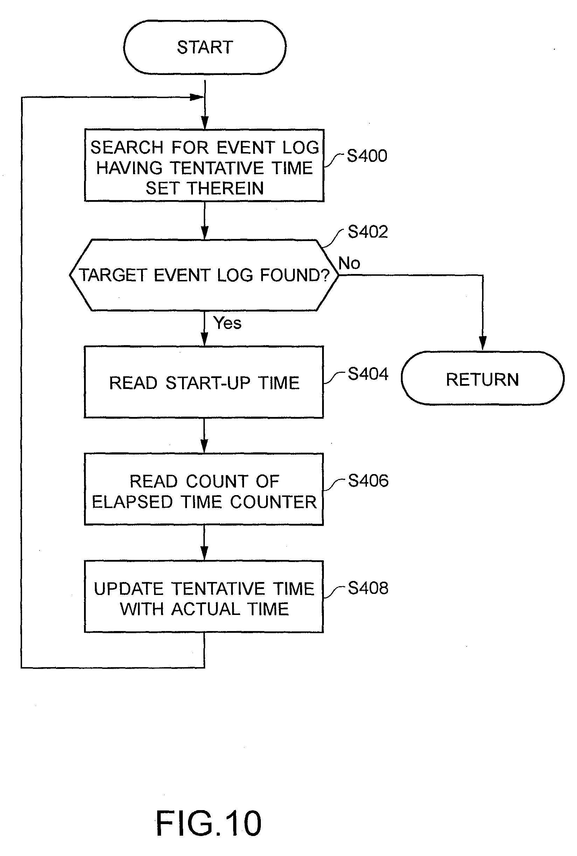

The time correction process in step S368 is discussed in detail with reference to Fig. 10.

Fig. 10 is a flowchart illustrating the time correction process.

When the time correction process is performed in step S368, the algorithm thereof starts with step S400 as shown in Fig. 10.

In step S400, the CPU 50 searches the EPROM 56 for an event log having the tentative time set therewithin. The algorithm proceeds to step S402, where the CPU 50 determines whether the event log having the tentative time therewithin is found in the search. If the CPU 50 determines that the event log is found in the search (Yes), the algorithm proceeds to step S404.

In step S404, the start-up time is read from the RAM 54. In step S406, the count of the elapsed time counter is read from the RAM 54. In step S408, the elapsed time from the start-up time is calculated based on the read count of the elapsed time counter, the actual time is calculated based on the start-up time, the elapsed time, and the tentative time, and the tentative time in the searched event log is updated with the actual time. The algorithm loops to step S400. More specifically, if the count of the elapsed time counter is used as the tentative time, the elapsed time is added to the start-up time, and the actual time is determined by subtracting the tentative time from the sum.

If the CPU 50 determines in step S402 that the event long is not found in the search (No), this series of steps ends, and the CPU 50 returns to the main routine thereof.

The operation of this embodiment is discussed below.

The registration of the device basic information in the printer 200 is discussed first.

A user inputs a registration request for the device basic information on the operation panel 60 in the printer 200. Following a guide displayed on a menu, etc., the user input the device basic information on the operation panel 60.

Upon receiving the device basic information, a device driver is notified of the IP address, the subnet mask, and the default gateway address out of the input device basic information in step S204. In this way, these addresses are set in the printer 200. The printer 200 is set to be communicable with the file management server 100. The input device basic information is registered in the EPROM 56 in step S206.

An event that has occurred in the printer 200 prior to the setting of the start-up time is discussed below.

When power is on in the printer 200, the elapsed time counter in the RAM 54 is initialized in step S252. Thereafter, steps S254-S258 are repeated with a predetermined period (100 [ms], for example), the count of the elapsed time counter is read from the RAM 54, " 1 " is added to the read count of the elapsed time counter, and the sum is then stored in the RAM 54.

If an event has occurred in the printer 200 prior to the setting of the start-up time, the event log is created with the content of the event associated with the tentative time in the EPROM 56 in step S304.

The setting of the start-up time in the printer 200 is discussed below.

If the start-up time is not set in the printer 200 in a state thereof communicable with the file management server 100, the device basic information is read from the EPROM 56, any desired file name is determined, the file creation request together with the determined file name is sent to the file management server 100 based on the read device basic information through steps S350-S354.

Upon receiving the file creation request, the file management server 100 creates a file having a file name designated in the file creation request in the storage unit 42 in step S104. If the file creation is successfully completed, the file creation success notification is sent to the printer 200 in step S108.

Upon receiving the file creation success notification, the printer 200 sends the property information acquisition request together with the determined file name to the file management server 100 based on the read device basic information in step S358.

Upon receiving the property information acquisition request, the file management server 100 creates in step S154 the property information for the file name designated in the property information acquisition request from among the files stored in the storage unit 42. If the property information creation is successfully completed, the created property information is sent to the printer 200 in step S158.

Upon receiving the property information, the CPU 50 acquires the time of creation from the received property information, and reads the count of the elapsed time counter from the RAM 54 in the printer 200 in steps S362 and S364. In step S366, the elapsed time from the start-up time is calculated based on the read count of the elapsed time counter, the start-up time is calculated by subtracting the elapsed time from the acquired time of creation, and the calculated start-up time is stored in the RAM 54. In this way, the start-up time is set in the printer 200.

When the start-up time is set in the printer 200, the time correction process for correcting the tentative time set in the event log is performed in step S368. In the time correction process, the algorithm starts with step S400 in which the event log having the tentative time set therein is searched for. When the event log is found in the search, the start-up time and the count of the elapsed time counter are read from the RAM 54 in steps S404 and S406. In step S408, the elapsed time from the start-up is calculated based on the read count of the elapsed time counter, and the actual time is calculated based on the start-up time, the elapsed time, and the tentative time.

The tentative time of the found event log is updated with the actual time based on the found event log. Similarly, this series of updating steps is performed on all event logs with tentative time set.

A case in which an event has occurred in the printer 200 subsequent to the setting of the start-up time is discussed.

If an event has occurred subsequent to the setting of the start-up time in the printer 200, the start-up time and the count of the elapsed time counter are read from the RAM 54 in steps S306 and S308. In step S310, the elapsed time from the start-up is calculated based on the read count of the elapsed time counter, and the present time is calculated by adding the elapsed time to the read start-up time. The content of the event is associated with the present time and is then stored in the EPROM 56 as the event log.

If the file management server 100 fails to create the file, the file creation failure notification is sent to the printer 200 in step S110. Upon receiving the file creation failure notification, the printer 200 quits the start-up time setting process without setting the start-up time. The same steps are performed if the printer 200 fails to be authenticated by the file management server 100 when the printer 200 issues a file creation request.

If the file management server 100 fails to create the property information, the acquisition failure notification is sent to the printer 200 in step S160. Upon receiving the acquisition failure notification, the printer 200 quits the start-up time setting process without setting the start-up time. The same steps are performed if the printer 200 fails to be authenticated by the file management server 100 when the printer 200 issues the property information acquisition request.

In accordance with this embodiment, the file management server 100 creates the file responsive to the file creation request when the file creation request is received, and stores the created file together with the time of creation in the storage unit 42. Upon receiving the property information acquisition request, the file management server 100 creates the property information of the file, responsive to the property information acquisition request, from among the files stored in the storage unit 42, and then sends the created property information to the printer 200. The printer 200 sends the file creation request to the file management server 100, and sends the property information acquisition request to the file management server 100, and upon receiving the property information, the printer 200 sets time based on the time of creation contained in the property information.

The printer 200 sets time using the file management functions of the file management server 100 thereof, namely, the function of recording the file together with the time of file creation and the function of providing the printer 200 with the time of the file creation. More specifically, time setting is performed using the function of a server such as a WWW server. In contrast to the conventional art, the printer 200 relatively easily sets time without the need for modifying or changing the file management server 100.

After receiving the property information in this embodiment, the printer 200 sets the start-up time based on the time of creation contained in the received property information and the measured elapsed time. Subsequent to the setting of the start-up time, the printer 200 sets time based on the set start-up time and the measured elapsed time.

Subsequent to the setting of the start-up time, time is set based on the start-up time and the elapsed time. This arrangement eliminates the need for accessing the file management server 100 for each time setting. The number of accesses to the file management server 100 is thus reduced.

The printer 200 sets the tentative time for the event log in the present embodiment when the start-up time is not set. When the start-up time is set, the printer 200 updates the tentative time of the event log with the actual time based on the set start-up time and the measured elapsed time.

When the start-up time is set, the time set in the event log is retrospectively updated with relatively precise time. Time control is thus performed in the printer 200 having no built-in timepiece at a relatively precise level.

In the above-referenced first embodiment, the file management server 100 corresponds to the file management terminal in one of the first, second, seventh, eighth and tenth inventions, the storage unit 42 corresponds to the storage means in the second invention, step S104 corresponds to the file creating step in the tenth invention or the file recording step in the tenth invention. Step S154 corresponds to the file detailed information creating step in the tenth invention, step S158 corresponds to the file detailed information sending step in the tenth invention, and the printer 200 corresponds to the time setting terminal in one of the first through fourth, seventh, eighth, and tenth inventions.

In accordance with the first embodiment, steps S250-S258 correspond to the elapsed time measurement means in one of the third, fourth, sixth, and ninth inventions, or the elapsed time measuring step in the eleventh invention, step S304 corresponds to the tentative time setting step in the eleventh invention, and step S354 corresponds to the file creation request sending step in the tenth invention. Step S358 corresponds to the detailed information acquisition request sending step in the tenth invention, steps S362-S366 correspond to the time setting step in the tenth invention, and steps S368, and S400-S408 correspond to the time resetting step in the eleventh invention.

In accordance with the first embodiment, the property information corresponds to the file detailed information in one of the first through third, seventh, eighth, and tenth inventions, the property information acquisition request corresponds to the detailed information acquisition request in the first, second, seventh, eighth, and tenth inventions, and the event log corresponds to the time setting item in one of the fourth, sixth, ninth, and eleventh inventions. The start-up time corresponds to the standard reference time in one of the third, fourth, sixth, ninth, and eleventh inventions.

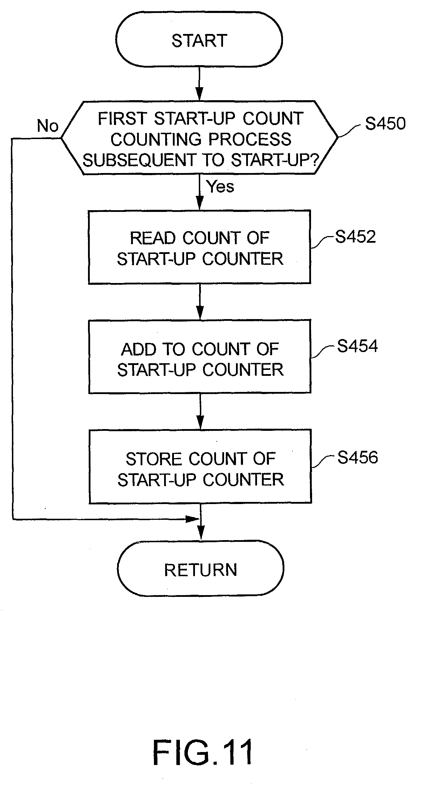

A second embodiment of the present invention is discussed below with reference to the drawings. Fig. 11 through Fig. 13 illustrate a time setting system, a time setting terminal, a time setting program, and a time setting method in accordance with the second embodiment of the present invention. Only elements different from those in the first embodiment are discussed, and elements identical to those in the first embodiment are designated with the same reference numerals, and the discussion thereof is omitted here.

In this embodiment of the present invention, the time setting system, the time setting terminal, the time setting program, and the time setting method are applied to a case, in which time is set in a printer 200 having no built-in timepiece using a file management server 100. The second embodiment is different from the first embodiment in that the start-up count of the printer 200 is counted, that the start-up count and tentative time are set in an event log, and that the tentative time in an event log having the same start-up count as the present start-up count is updated with actual time.

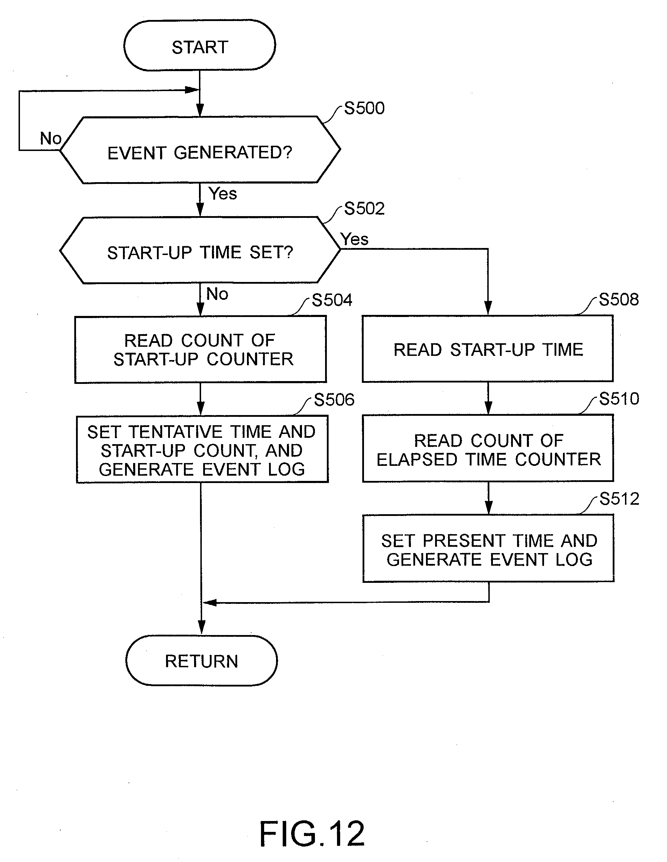

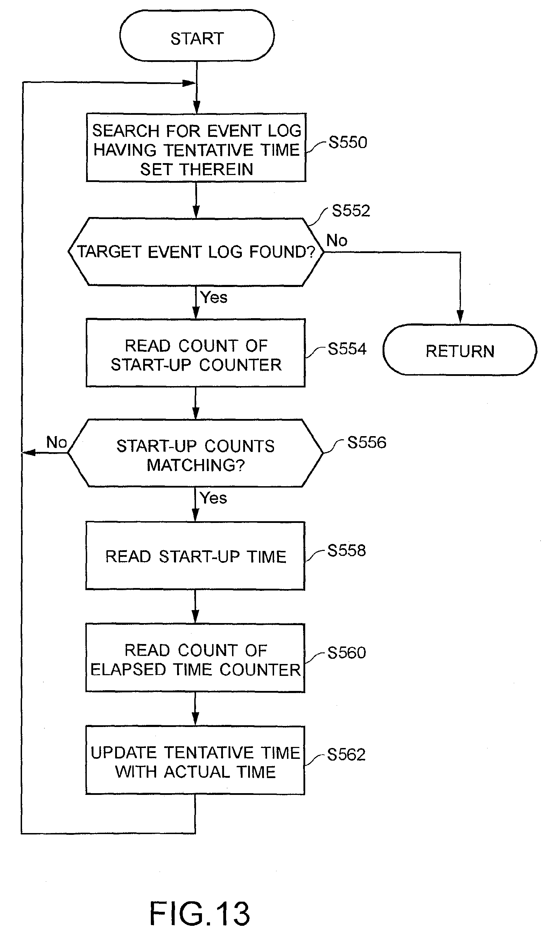

The CPU 50 starts a predetermined program stored in a predetermined area of the ROM 52. Under the control of the program, the CPU 50 performs, in a time sharing manner, a start-up count counting process illustrated in a flowchart in Fig. 11, an event log creation process illustrated in a flowchart in Fig. 12 instead of the event log creation process illustrated in Fig. 8, and a time correction process illustrated in a flowchart in Fig. 13 instead of the time correction process illustrated in Fig. 10.

The start-up count counting process is first discussed in detail with reference to Fig. 11.

Fig. I 1 is the flowchart illustrating the start-up count counting process.

In the start-up count counting process, the start-up count of the printer 200 is counted. The CPU 50 starts the process with step S450 as shown in Fig. 11.

The CPU 50 determines in step S450 whether the start-up count counting process is performed for the first time subsequent to a start-up operation. If the CPU 50 determines that the start-up count counting process is performed for the first time after the start-up (Yes), the algorithm proceeds to step S452. The count of the start-up counter is read from the EPROM 56, and the algorithm proceeds to step S456. The CPU 50 adds "1" to the read count of the start-up counter, and then algorithm proceeds to step S458. The count of the start-up counter is stored in the EPROM 56. This series of steps ends, and the CPU 50 returns to the main routine.

If the CPU 50 determines in step S450 that the start-up count counting process is performed for the second time or more subsequent to the start-up (No), this series of steps ends, and the CPU 50 returns to the main routine.

The event log creation process is discussed in detail with reference to Fig. 12.

Fig. 12 is a flowchart illustrating the event log creation process.

In the event log creation process, an event log with the content of the event is generated when the printer 200 malfunctions or is faulty, or when an event, which needs to be reported to a user or an operator, occurs. The CPU 50 starts the process with step S500 as shown in Fig. 12.

The CPU 50 determines in step S500 whether an event has occurred. If the CPU 50 determines that an event has occurred (Yes), the algorithm proceeds to step S502; otherwise (No), the CPU 50 waits on standby in step S500 until an event occurs.

In step S502, the CPU 50 determines whether start-up time is set. If the CPU 50 determines the start-up time is not set (No), the algorithm proceeds to step S504, where the count of the start-up counter is read from the EPROM 56. The algorithm proceeds to step S506, where the CPU 50 creates, in the EPROM 56, an event log with the content of the event associated with the count of the start-up counter (hereinafter referred to as a current start-up count) and tentative time. This series of steps ends, and the CPU 50 returns to the main routine thereof.

If the CPU 50 determines in step S502 that the start-up time is set (Yes), the algorithm proceeds to step S508, where the start-up time is read from the RAM 54. The algorithm proceeds to step S510, where the count of the elapsed time counter is read from the RAM 54. The algorithm proceeds to step S512.

In step S512, the CPU 50 calculates the elapsed time from the start-up based on the read count of the elapsed time counter, calculates the present time by adding the elapsed time to the read start-up time, and creates an event log in the EPROM 56 by associating the content of the event with the present time. This series of steps ends, and the CPU 50 returns to the main routine thereof.

The time correction process is discussed in detail with reference to Fig. 13.

Fig. 13 is a flowchart illustrating the time correction process.

When the time correction process is performed in step S368, the algorithm proceeds to step S550 as shown in Fig. 13.

In step S550, the CPU 50 searches the EPROM 56 for an event log having the tentative time set therein. The algorithm proceeds to step S552, where the CPU 50 determines whether the event log is searched for. If the CPU 50 determines that the event log is found in the search (Yes), the algorithm proceeds to step S554.

The CPU 50 reads in step S554 the count of the start-up counter from the EPROM 56, and then proceeds to step S556. The CPU 50 determines whether the start-up count set in the event log found in the search matches the current start-up count. If the CPU 50 determines that the start-up count in the event log matches the current start-up count (Yes), the algorithm proceeds to step S558.

In step S558, the start-up time is read from the RAM 54. In step S560, the count of the elapsed time counter is read from the RAM 54. In step S562, the elapsed time from the start-up is calculated based on the read count of the elapsed time counter, the actual time is calculated based on the start-up time, the elapsed time, and the tentative time, and the tentative time in the found event log is updated with the actual time. The algorithm proceeds to step S550.

If the CPU 50 determines in step S556 that the start-up count in the event log fails to match the current start-up count (No), the algorithm loops to step S550.

If the CPU 50 determines in step s552 that the event is not found in the search (No), this series of steps ends, and the CPU 50 returns to the main routine thereof.

The operation of the second embodiment is discussed below.

Discussed here is the case in which an event has occurred in the printer 200 prior to the setting of the start-up time.

When power is on in the printer 200, the count of the start-up counter is read from the EPROM 56, "1" is added to the read count, and the sum is then stored in the EPROM 56 in steps S452-S456. This process is performed only once at the start-up.

When the event has occurred in the printer 200 prior to the setting of the start-up time, the count of the start-up counter is read from the EPROM 56, and the event log is created with the content of the event associated with the current start-up count and the tentative time in the EPROM 56 in steps S452-S456.

The time correction process of the printer 200 is discussed below.

When the start-up time is set in the printer 200, the time correction process for correcting the tentative time set in the event long is performed in step S368. In the time correction process, the event log having the tentative time set therein is searched in the EPROM 56 in step S550. If the event log is found in the search, the count of the start-up counter is read from the EPROM 56 in step S554, and the CPU 50 determines in step S556 whether the start-up count set in the event log found in the search matches the current start-up count. If the CPU 50 determines that the start-up count in the event log matches the current start-up count, the start-up time and the count of the elapsed time counter are read from the RAM 54 in steps S558 and S560. In step S562, the elapsed time from the start-up is calculated from the read count of the elapsed time counter, and the actual time is calculated based on the start-up time, the elapsed time, and the tentative time. The tentative time in the found event log is updated with the actual time. Similarly, this series of steps is performed on all event logs having the tentative time set therein.

If the start-up count set in the event log fails to match the current start-up count, the time correction of that event log is not performed. This is because the tentative time, which was set before the currently effective start-up, makes it impossible to perform precise updating for the event log.

The same operations as those in the first embodiment are performed when the device basic information is registered in the printer 200, when the start-up time is set in the printer 200 (except the time correction process), when an event occurs in the printer 200 subsequent to the setting of the start-up time, when the file management server 100 fails to create a file, when the file management server 100 fails to create property information, and when the authentication of the printer 200 by the file management server 100 is unsuccessful.

When the start-up time is not set in the printer 200 in this embodiment, the current start-up count and the tentative time are set in the event log. When the start-up time is set, the tentative time is updated with the actual time in the event log having the same start-up count as the current start-up count based on the set start-up time and the measured elapsed time.

With the start-up time set, the time set in the event log is retrospectively updated with relative precise time. Since the tentative time in the event log having the start-up count equal to the current start-up time is updated, updated time becomes even more precise. Time control is performed at a relatively precise manner even in printer 200 having no built-in timepiece.

In the second embodiment, the file management server 100 corresponds to the file management terminal in one of the first, second, seventh, eighth, and tenth inventions, the storage unit 42 corresponds the storage means in the second invention, and step S104 corresponds to the file creating step in the tenth invention, or the recording step in the tenth invention. Step S154 corresponds to the file detailed information creating step in the tenth invention, step S158 corresponds to the file detailed information sending step in the tenth invention, and the printer 200 corresponds to the time setting terminal in one of the first through fifth, seventh, eighth, and tenth inventions.

In the second embodiment, steps S250-S258 correspond to the elapsed time measurement means in one of the third through sixth, and ninth inventions, or the elapsed time measuring step in the eleventh invention, step S354 corresponds to the file creation request sending step in the tenth invention, and step S358 corresponds to the detailed information acquisition request sending step in the tenth invention. Steps S362-S366 correspond to the time setting step in the tenth invention, steps S368 and S500-S512 correspond to the time resetting step in the eleventh invention, and steps S450-S456 correspond to the start-up count counting means in the fifth invention.

In the second embodiment, steps S504 and S506 correspond to the tentative time setting step in the first invention, the property information corresponds to the file detailed information in one of the first through third, seventh, eighth, and tenth inventions, and the property information acquisition request corresponds to the detailed information acquisition request in one of the first, second, seventh, eighth, and tenth inventions. The event log corresponds to the time setting item in one of the fourth, sixth, ninth, and eleventh inventions, and the start-up time corresponds to the standard reference time in one of the third through sixth, ninth and eleventh inventions.

Protocols for use in communications between the file management server 100 and the printer 200 have not been particularly discussed in connection with the first and second embodiments. For example, HTTP (HyperText Transfer Protocol), FTP (File Transfer Protocol), mail protocol (SMTP (Simple Mail Transfer Protocol) and POP 3 (Post Office Protocol version 3)), etc. may be used.

When FTP is used, the file management server 100 is an FTP server, and the printer 200 acquires the file detailed information using a LIST command, extracts the time of creation from the file detailed information, and sets time. Two typical forms are present in the acquired file detailed information. For example, to acquire file information at 5: 40, October 28, 2002, form 1 information "10-28-02 05:40 PM1 file name" and form 2 information "-rw-rr 1 503 503 1 Oct 28 05:40 file name" are available. This difference is attributed to the type of the FTP server. In this embodiment, a form determination for determining the location of time information from these pieces of information is performed depending on whether the first character of the file detailed information is an alphabet or a number. If the first character is a number, the file detailed information is determined as being the form 1 information, and "10-28-02 05:40 PM" is extracted as the time information. If the first character is an alphabet, the file detailed information is determined as being the form 2 information, and "Oct 28 05:40" is extracted as the time information. The extracted information may be converted to any desired format such as "October 18, 2002 5:40 PM", and is then set as time.

When the mail protocol is used, the file management server 100 is a mail sever, and the printer 200 sends a mail to the mail address thereof, extracts a time stamp from the same mail received from the mail server, and sets time. For example, the header portion of the received mail may be as follows:
From: Fukao Akihito
Sent: Tuesday, November 19, 2002 1:27 PM
To: Fukao Akihito
Subject: test

From this information, time information "Tuesday, November 19, 2002 1:27 PM" is extracted, and is then converted to a desired format such as "November 19, 2002 1:27". The time information in the converted format is set as time. In this arrangement, time setting is relatively easily performed in the printer 200 without modifying or changing the mail server.

In the first and second embodiments, time setting is performed in the event log. Time setting is not limited to the event log. The time of creation may be set in a file created by the printer 200.

In the first and second embodiments, time is set in the printer 200. The present invention is not limited to the printer 200. Time setting may be performed on a network-linked devices including a projector, a digital camera, a digital video camera, a personal computer, a PDA (Personal Digital Assistant), a network storage, audio equipment, a cellular phone, a PHS® (Personal Handyphone System), a watch-type PDA, an STB (Set Top Box), a POS (Point of Sale) terminal, a copying apparatus, a facsimile device, telephones (including an IP phone), an exchange, an NCU (Network Control Unit), a router, a hub, a bridge, and other network-linked devices.

Time is set in a device (such as the printer 200) having no built-in timepiece in the first and second embodiments. The present invention is not limited to the device having no built-in timepiece. Time may be set in a device having a built-in timepiece.

To execute the process detailed in the flowcharts in Fig. 3 and Fig. 4, the control program stored beforehand in the ROM 32 is executed in the first embodiment. The present invention is not limited to this arrangement. The control program may be read into the RAM 34 from a storage medium storing the program code of the program to perform the process.

To execute the process detailed in the flowcharts in Fig. 6 through Fig. 10, the control program stored beforehand in the ROM 52 is executed in the first embodiment. The present invention is not limited to this arrangement. The control program may be read into the RAM 54 from a storage medium storing the program code of the program to perform the process.

To execute the process detailed in the flowcharts in Fig. 11 through Fig. 13, the control program stored beforehand in the ROM 52 is executed in the second embodiment. The present invention is not limited to this arrangement. The control program may be read into the RAM 54 from a storage medium storing the program code of the program to perform the process.

The storage medium may include any computer readable storage medium regardless of whether the storage medium is read electronically, magnetically, or optically, and may be a semiconductor storage medium such as RAM or ROM, a magnetic storage medium such as FD or HD, an optically readable storage medium such as a CD, CDV, LD, or DVD, or a magnetically recorded/optically readable storage medium such as MO, for example.

In the first and second embodiments of the present invention, the time setting system, the time setting terminal, the time setting program, and the time setting method are applied to the network system of the Internet 199. The present invention is not limited to this arrangement. For example, the present invention may be applied to a so-called Intranet that performs communications using the same method as the Internet 199. The present invention is not limited to a network performing the same method as the Internet 199. The present invention may be applied to an ordinary network.

In the first and second embodiments of the present invention, the time setting system, the time setting terminal, the time setting program, and the time setting method are applied to the case in which time is set in the printer 200 having no built-in timepiece using the file management server 100 as shown in Fig. 1. The present invention is not limited to this arrangement. The present invention may be applied to other cases without departing from the scope of the present invention.

The aforegoing description has been given by way of example only and it will be appreciated by a person skilled in the art that modifications can be made without departing from the scope of the present invention.

## Claims

1. A time setting system for communicatingly connecting a time setting terminal (200) to a file management terminal (100) for recording a file together with a time of creation of the file, and for setting time in the time setting terminal using the file management terminal,
wherein upon receiving a file creation request for requesting the creation of the file, the file management terminal creates the file responsive to the received file creation request, and records the created file together with time of the creation of the file, and upon receiving a detailed information acquisition request for requesting the acquisition of file detailed information containing the time of the file creation, the file management terminal creates the file detailed information concerning the file responsive to the received detailed information acquisition request, and sends the created file detailed information to the time setting terminal, and
wherein the time setting terminal sends the file creation request to the file management terminal, and sends the detailed information acquisition request to the file management terminal, and upon receiving the file detailed information, the time setting terminal sets time based on the time of the file creation extracted from the received file detailed information.

2. A time setting system for communicatingly connecting a time setting terminal (200) having no built-in timepiece to a file management terminal (100) for recording a file together with a time of creation of the file, and for setting time in the time setting terminal using the file management terminal, wherein the time management terminal comprises storage means for storing the file, said system comprises upon receiving a file creation request for requesting the creation of the file, the file management terminal creates the file responsive to the received file creation request, and records the created file together with time of the creation of the file in the storage means, and upon receiving a detailed information acquisition request for requesting the acquisition of file detailed information containing the time of the file creation, the file management terminal creates the file detailed information concerning the file, responsive to the received detailed information acquisition request, from among files stored in the storage means, and sends the created file detailed information to the time setting terminal, and
wherein the time setting terminal sends the file creation request to the file management terminal, and sends the detailed information acquisition request to the file management terminal, and upon receiving the file detailed information, the time setting terminal sets time based on the time of the file creation extracted from the received file detailed information.

3. A time setting system according to claim 2, wherein the time setting terminal further comprises elapsed time measurement means for measuring time elapsed from a predetermined reference time, and upon receiving the file detailed information, the time setting terminal sets standard reference time based on the time of the file creation extracted from the received file detailed information and the elapsed time measured by the elapsed time measurement means, and after the setting of the standard reference time, the time setting terminal sets time based on the set standard reference time and the elapsed time measured by the elapsed time measurement means.

4. A time setting system according to claim 3, wherein when the standard reference time is not set, the time setting terminal sets tentative time in a time setting item that requires time setting, and when the standard reference time is set, the time setting terminal updates the tentative time with actual time based on the set standard reference time and the elapsed time measured by the elapsed time measurement means.

5. A time setting system according to claim 4, wherein the time setting terminal further comprises start-up count counting means for counting the start up count, and when the standard reference time is not set, the time setting terminal sets the start-up count counted by the start-up count counting means and the tentative time in the time setting item that requires time setting, and when the standard reference time is set, the time setting terminal updates the tentative time with actual time in the time setting item which has the same count start-up count as the start-up count counted by the start-up counting means, based on the set standard reference time and the elapsed time measured by the elapsed time measurement means.

6. A time setting system for setting time, comprising elapsed time measurement means for measuring time elapsed from a predetermined reference time,
wherein when standard reference time is not set, the time setting system sets tentative time in a time setting item that requires time setting, and when the standard reference time is set, the time setting system updates the tentative time with actual time based on the set standard reference time and the elapsed time measured by the elapsed time measurement means.

7. A time setting terminal communicatingly connected to the file management terminal in a time setting system according to claim 1,
wherein the time setting terminal sends the file creation request for requesting the creation of the file to the file management terminal, sends, to the file management terminal, the detailed information acquisition request for requesting the acquisition of file detailed information containing time of the creation of the file, and upon receiving the file detailed information, the time setting terminal sets time based on the time of the file creation extracted from the received file detailed information.

8. A time setting program to be executed by a time setting terminal according to claim 7 containing a computer, comprising:
sending, to the file management terminal, the file creation request for requesting the creation of the file, sending, to the file management terminal and the detailed information acquisition request for requesting the acquisition of the file detailed information containing the time of file creation, and setting time based on the time of the file creation extracted from the received file detailed information when the file detailed information is received.

9. A time setting program to be executed by a time setting system according to claim 6 containing a computer system, comprising:
setting tentative time in the time setting item that requires time setting when the standard reference time is not set, and updating the tentative time with actual time based on the set standard reference time and the elapsed time measured by the elapsed time measurement means when the standard reference time is set.

10. A time setting method for communicatingly connecting a time setting terminal (200) to a file management terminal (100) for recording a file together with a time of creation of the file, and for setting time in the time setting terminal using the file management terminal, comprising:
a file creation request sending step, performed by the time setting terminal, for sending, to the file management terminal, a file creation request for requesting the creation of the file,
a file creating step, performed by the file management terminal, for creating the file responsive to the received file creation request when the file creation request is received,
a file recording step, performed by the file management terminal, for recording the file created in the file creating step together with the time of the creation of the file,
a detailed information acquisition request sending step, performed by the time setting terminal, for sending, to the file management terminal, a detailed information acquisition request for requesting the acquisition of file detailed information containing the time of the file creation,
a file detailed information creating step, performed by the file management terminal, for creating the file detailed information relating to the file responsive to the received detailed information acquisition request when the detailed information acquisition request is received,
a file detailed information sending step, performed by the file management terminal, for sending, to the time setting terminal, the file detailed information created in the file detained information creating step, and
a time setting step, performed by the time setting terminal, for setting time based on the time of file creation extracted from the received file detailed information when the file detailed information is received.

11. A time setting method for setting time, comprising:
an elapsed time measuring step for measuring time elapsed from a predetermined reference time,
a tentative time setting step for setting tentative time in a time setting item that requires time setting when standard reference time is not set, and
a time resetting step for updating the tentative time with actual time based on the set standard reference time and the elapsed time measured in the elapsed time measuring step when standard reference time is set.
